# EUROPÄISCHE PATENTSCHRIFT

(11) **EP 0 911 546 B1**
(45) Veröffentlichungstag und Bekanntmachung des Hinweises auf die Patenterteilung: **04.06.2003**
(21) Anmeldenummer: 98120114.8
(22) Anmeldetag: 23.10.1998
(51) Int. Cl.: F16H 47/04

(54) **Hydrostatisch-mechanischer Fahrantrieb**
Hydrostatic-mechanical transmission.
Transmission hydrostatique-mécanique

(30) Priorität: 27.10.1997 DE 19747459
(43) Veröffentlichungstag der Anmeldung: 28.04.1999
(73) Patentinhaber: BRUENINGHAUS HYDROMATIK GMBH, 89275 Elchingen (DE)
(72) Erfinder: Erkkilae, Mikko, 72160 Horb (DE)
(74) Vertreter: Körfer, Thomas, Dipl.-Phys.

(56) Entgegenhaltungen:
- EP-A- 0 773 387
- DE-A- 19 524 188
- US-A- 3 783 711
- US-A- 3 979 972
- US-A- 4 196 644
- US-A- 4 232 570

## Beschreibung

Die Erfindung bezieht sich auf einen Fahrantrieb nach dem Oberbegriff des Anspruches 1.

Ein Fahrantrieb dieser Art ist in der DE 195 24 188 A1 beschrieben. Dieser bekannte Fahrantrieb weist einen ersten und einen zweiten Antriebsstrang auf, die parallel zueinander angeordnet sind und von denen wahlweise der erste Antriebsstrang oder der zweite Antriebsstrang einschaltbar ist. Im einzelnen ist eine den zweiten Antriebsstrang bildende Direktdurchtriebswelle vorgesehen, die an ihrem einen Ende als Antriebswelle mit einer Antriebsmaschine verbunden ist, an ihrem anderen Ende als Abtriebswelle durch ein Differenzialgetriebe mit einer Radachse verbunden ist, und in der eine ein- und ausrückbare Kupplung angeordnet ist. Antriebsseitig von der Kupplung ist die Hydropumpe eines hydrostatischen Getriebes mit der Direktdurchtriebswelle verbunden. Ein zugehöriger Hydromotor ist mit einer sich parallel zur Direktdurchtriebswelle erstreckenden Getriebewelle verbunden, die abtriebsseitig durch ein aus zwei miteinander kämmenden Zahnrädern bestehendes Rädergetriebe abtriebsseitig von der Kupplung mit der Direktdurchtriebswelle verbunden ist. Die Hydropumpe ist durch einen Verstellmechanismus bezüglich ihres Durchsatzvolumens verstellbar und auch in ihre sogenannte Nullstellung verstellbar, in der ihr Durchsatzvolumen Null ist und somit die Antriebsverbindung mit dem Hydromotor abgeschaltet ist. Zur Einschaltung des ersten hydrostatischen Antriebsstrangs ist die Kupplung auszurücken und das hydrostatische Getriebe durch Einstellung eines Durchsatzvolumens an der Hydropumpe einzuschalten. Im Funktionsbetrieb des ersten Antriebsstranges wird die Kupplung umgangen. Zur Einschaltung des zweiten, mechanisch wirksamen Antriebsstranges ist die Kupplung einzurücken und der erste Antriebsstrang durch ein Verstellen der Hydropumpe in die Nullstellung abzuschalten.

Ein hydrostatisch-mechanischer Fahrantrieb dieser Art ist aus der gattungs gemäβen US 4,232,570 zu entnehmen. Bei diesem vorbekannten Fahrantrieb erstreckt sich der zweite, mechanisch arbeitende Antriebsstrang zwischen einem Antriebsmotor und einem Schaltgetriebe, wobei dazwischen ein Summiergetriebe in Form eines Planetengetriebes mit einem Umlaufrad, einem Sonnenrad und damit kämmenden Planetenrädern angeordnet ist. Das Sonnenrad und die Planetenräder sind einer Radnabe zugeordnet, die auf der sich zwischen dem Antriebsmotor und dem Schaltgetriebe erstreckenden Welle drehbar gelagert ist. Der erste hydrostatisch arbeitende Antriebsstrang ist durch ein hydrostatisches Getriebe gebildet, dessen Hydropumpe auf der Antriebswelle des Antriebsmotors sitzt, und dessen Hydromotor durch ein Rädergetriebe mit der Radnabe in Antriebsverbindung steht.

Mit diesem Fahrantrieb lassen sich die vorgenannten drei Schaltzustände realisieren. Im weiteren ist diesem Fahrantrieb zwar ein Getriebe zugeordnet, jedoch ist dieses vom Summiergetriebe separat angeordnet.

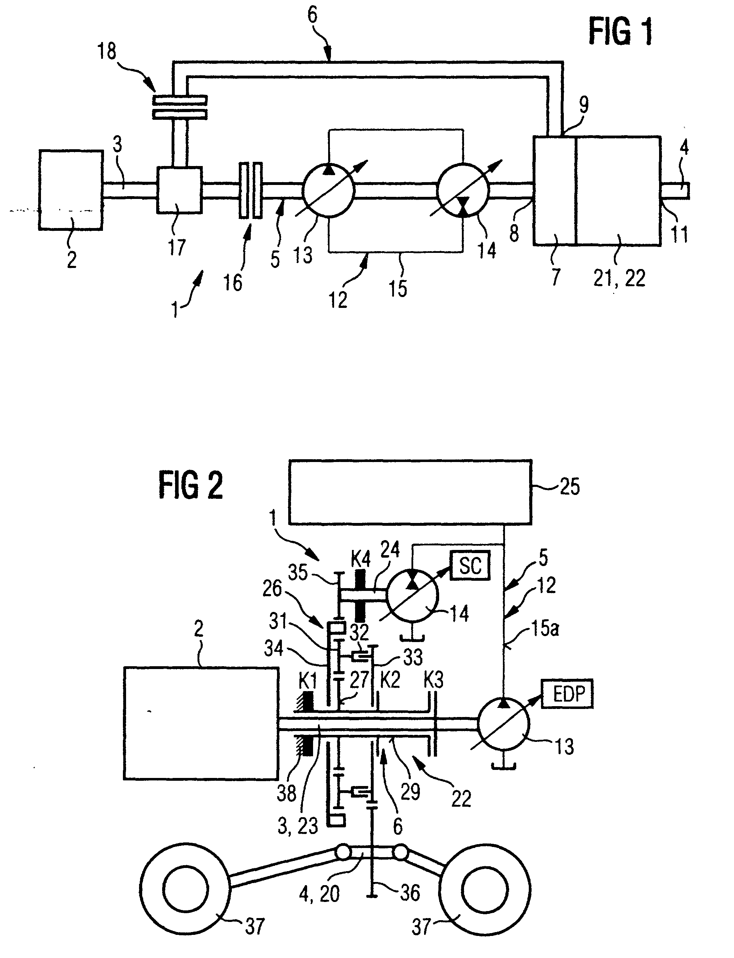

Ein dem vorbeschriebenen Fahrantrieb ähnlicher Fahrantrieb ist aus der US 3,783,711 zu entnehmen. Bei diesem vorbekannten Fahrantrieb ist ein Summiergetriebe durch mehrere Planetengetriebe gebildet, wobei Kupplungen vorgesehen sind, mit denen sich ein zweiter, mechanisch arbeitender Antriebsstrang für zwei unterschiedliche Geschwindigkeiten einstellen läßt siehe Spalte 5, Zeile 35 und die Schaltzustandsaufstellung gemäß Fig. 1.

Die Vorteile des hydrostatisch wirksamen ersten Antriebsstrangs sind ein stufenloser Wandlungsbereich und ein einfacher Reversierbetrieb. Die Nachteile sind eine verhältnismäßig große Bauweise der Komponenten sowie dadurch vorgegebene hohe Herstellungskosten und ein verringerter Wirkungsgrad aufgrund von Leckverlusten insbesondere bei hohen Fahrgeschwindigkeiten. Die Vorteile des mechanisch wirksamen zweiten Antriebsstrangs sind ein hoher Wirkungsgrad und eine verhältnismäßig kleine Bauweise der Komponenten, wodurch auch geringere Herstellungskosten vorgegeben sind. Als Nachteil ist anzusehen, daß ein Wandlungsbereich bei üblichen Zahnradgetrieben nur in Stufen möglich ist und für einen stufenlosen Wandlungsbereich besondere komplizierte Wandlungsgetriebe erforderlich sind, und für einen Reversierbetrieb ein Getriebe mit Reversierkupplung erforderlich ist.

Je nach Verwendung des Fahrantriebs sind in der Praxis jedoch insbesondere bei einem mechanischen Getriebe mit mehreren Gängen unterschiedliche Forderungen zu erfüllen, z.B. eine hohe Leistungsausnutzung in der höchsten Gangstufe und hohe Drehzahlen. Diese Forderung kann ein hydrostatisches Getriebe aufgrund von Leckverlusten und einer mangelnden Eignung für hohe Drehzahlen nur teilweise erfüllen.

Der Erfindung liegt die Aufgabe zugrunde, einen Fahrantrieb der eingangs angegebenen Art so auszugestalten, daß die Vorteile eines hydrostatischen Antriebs und eines mechanischen Antriebs in Kombination ausgenutzt werden können und die Verwendbarkeit des Fahrantriebs verbessert ist.

Diese Aufgabe wird durch die Merkmale des Anspruchs 1 gelöst.

Beim erfindungsgemäßen Fahrantrieb lassen sich die Antriebsstränge jeweils einzeln und im Sinne eines Überlagerungsgetriebes gleichzeitig einschalten, wobei das Summiergetriebe dafür sorgt, daß die von den Antriebssträngen übertragene Leistung problemlos an die Abtriebswelle weitergeleitet werden kann. Hierdurch läßt sich zusätzlich zu dem ersten Schaltzustand indem der erste Antriebsstrang eingeschaltet ist und dem zweiten Schaltzustand, indem der zweite Antriebsstrang eingeschaltet ist ein dritter Schaltzustand einschalten, in dem beide Antriebsstränge eingeschaltet sind und das Überlagerungsgetriebe bilden. In diesem dritten Schaltzustand können die Vorteile des hydrostatischen Antriebs und des mechanischen Antriebs ausgenutzt werden. Außerdem läßt sich mit dem mechanischen Getriebe eine Abtriebsdrehzahl erreichen, die beträchtlich höher liegt als die zulässige Drehzahl eines hydrostatischen Getriebes bzw. seiner Komponenten. Im Rahmen der Erfindung ist es möglich, den dritten Schaltzustand dadurch zu verwirklichen, daß eine weitere ein- und ausrückbare Kupplung im ersten Antriebbstrang vorgesehen wird. In einem solchen Fall kann auch ein konstantes hydrostatisches Getriebe verwendet werden. Die Einschaltung des ersten Antriebsstranges läßt sich jedoch auch durch eine auf Null verstellbare Hydropumpe verwirklichen. In einem solchen Fall kann die verstellbare Hydropumpe eine Kupplung im ersten Antriebsstrang ersetzten.

Im Rahmen der Erfindung ist es vorteilhaft, den Fahrantrieb so zu konzipieren, daß das hydrostatische Getriebe für einen niedrigeren Drehzahlbereich und das mechanische Getriebe für einen höheren Drehzahlbereich bestimmt ist, wodurch bereits durch Ein- und Ausschaltung des hydrostatischen Getriebes und des mechanischen Getriebes zwei Gänge für den Fahrantrieb einschaltbar sind und wodurch sich der Fahrantrieb insbesondere für die Zuordnung eines Verbrennungsmotors, vorzugsweise eines Dieselmotors, als Antriebsmaschine eignet, um unterschiedlich hohe Bereiche der Abtriebsdrehzahl des Fahrantriebs bei einem günstigen Drehzahlbereich der Antriebsmaschine zu erreichen. Durch die Verwendung eines mechanischen Getriebes mit mehreren Gangstufen läßt sich die Ausnutzung des günstigen Drehzahlbereichs der Antriebsmaschine in mehreren unterschiedlich hohen Abtriebsdrehzahlbereichen des Fahrantriebs erreichen. Um einen stufenlosen Wandlungsbereich und/oder einen Reversierbetrieb zu verwirklichen, ist es vorteilhaft, ein verstellbares hydrostatisches Getriebe zu verwenden, bei dem ein oder beide hydrostatischen Maschinen verstellbar und/oder über ihre Nullstellung hinaus verstellbar oder einstellbar sind. Im Falle der Reversierbarkeit ist ein Summiergetriebe zu verwenden, das auch bei unterschiedlichen Drehrichtungen im ersten oder auch im zweiten Antriebsstrang einsetzbar ist. Das Summiergetriebe ist vorzugsweise durch ein Umlaufgetriebe, z. B. ein Planetengetriebe, gebildet.

In den Unteransprüchen sind Merkmale enthalten, die einen Reversierbetrieb und einen stufenlosen Wandlungsbereich ermöglichen und zu einer vorteilhaften Anordnung der Komponenten des mechanischen Getriebes, der Kupplungen und des hydrostatischen Getriebes führen, wodurch eine einfache, kleine und kostengünstig herstellbare sowie günstig montierbare oder demontierbare Bauweise erreicht wird. Außerdem wird ein Summiergetriebe einfacher Bauweise und mit sicherer Funktion verwendet.

Nachfolgend werden die Erfindung und weitere durch sie erzielbare Vorteile anhand von bevorzugten Ausführungsbeispielen und der Zeichnung näher erläutert. Es zeigen:
- Fig. 1: einen erfindungsgemäßen kombinierten Fahrantrieb, vorzugsweise für ein Baufahrzeug wie einen Bagger, in schematischer Darstellung;
- Fig. 2 bis 5: ein abgewandeltes Ausführungsbeispiel des Fahrantriebs in jeweils einer von vier Gangstufen;
- Fig. 6: eine tabellarische Darstellung der Gangstufen;
- Fig. 7: ein die Gangstufen darstellendes Diagramm.

Die Hauptfunktionsteile des allgemein mit 1 bezeichneten und von einer Antriebsmaschine 2 antreibbaren Fahrantriebs sind eine Antriebswelle 3, eine Abtriebswelle 4, ein erster Antriebsstrang 5, ein dazu parallel angeordneter zweiter Antriebsstrang 6, ein Summiergetriebe 7 mit einem ersten Eingang 8, einem zweiten Eingang 9 und einem Ausgang 11, von dem die Abtriebswelle 4 ausgeht, ein hydrostatisches Getriebe 12 mit einer Hydropumpe 13 und einem Hydromotor 14, die durch einen geschlossenen Kreislauf 15 miteinander verbunden sind, eine erste wahlweise ein- und ausrückbare Kupplung 16, die dem ersten Antriebsstrang 5 zugeordnet ist, vorzugsweise zwischen einem die Antriebsstränge 5, 6 miteinander verbindenden, z.B. durch ein Zahnradpaar oder ein Winkelgetriebe gebildeten Verbindungsgetriebe 17 und der Hydropumpe 13, und eine zweite wahlweise ein- und ausrückbare Kupplung 18, die im zweiten Antriebsstrang 6 angeordnet ist. Als Antriebsmaschine 2 kann vorzugsweise ein Dieselmotor dienen. Bei den hydrostatischen Maschinen des hydrostatischen Getriebes 12 handelt es sich vorzugsweise um Axialkolbenmaschinen von denen eine, vorzugsweise der Hydromotor 14, oder beide mit veränderlichem Durchsatzvolumen ausgebildet sein können, z.B. durch eine vorzugsweise schwenkbare Schiefscheibe , die über ihre Nullstellung hinaus zum Zweck der Drehrichtungsumkehr verstellbar sein kann. Die Kupplungen 16, 18 können jeweils wenigstens ein Reibscheiben-Paar aufweisen.

Den hydrostatischen Maschinen und den Kupplungen 16, 18 sind in Fig. 1 nicht dargestellte Betätigungsmechanismen zugeordnet, die eine Verstellung bzw. ein Ein- und Ausrücken ermöglichen und durch eine gemeinsame Steuervorrichtung ansteuerbar sind. Durch ein Einrücken der ersten Kupplung 16 läßt sich bei ausgerückter zweiter Kupplung 18 der hydrostatische erste Antriebsstrang 5 und somit ein hydrostatischer Antrieb einschalten. Durch ein Einrücken der zweiten Kupplung 18 läßt sich bei ausgerückter erster Kupplung 16 der mechanische Antriebsstrang 6 und somit ein mechanischer Antrieb einschalten. Durch ein Einrücken beider Kupplungen 16, 18 sind beide Antriebsstränge 5, 6 in Antriebsfunktion, wodurch sich ein sogenanntes Überlagerungsgetriebe und somit ein überlagerter hydrostatisch-mechanischer Antrieb ergeben. Die Antriebsstränge 5, 6 sind vorzugsweise so ausgebildet, daß die Abtriebsdrehzahl des ersten Abtriebsstrangs 5 kleiner ist als die Abtriebsdrehzahl des zweiten Antriebsstrangs 6. Hierdurch sind unterschiedliche Abtriebsdrehzahlen erreichbar, wodurch ein Getriebe gebildet ist. Das Summiergetriebe 7 wandelt gleiche oder unterschiedliche Abtriebsdrehzahlen der Antriebsstränge 5, 6 in eine gemeinsame Abtriebsdrehzahl um. Beim Vorhandensein eines vorzugsweise verstellbaren hydrostatischen Getriebes 12 läßt sich in einem zugehörigen Wandlungsbereich die Abtriebsdrehzahl stufenlos vergrößern oder verkleinern und zwar im ersten und im dritten der vorbeschriebenen Antriebsfälle, in denen das hydrostatische Getriebe 12 eingeschaltet ist.

Für einen Fahrantrieb 1 ist es vorteilhaft, zusätzlich ein in Stufen oder stufenlos verstellbares Getriebe 21 anzuordnen, das der Antriebswelle 3 oder dem zweiten Antriebsstrang 6 oder der Abtriebswelle 4 zugeordnet sein kann, z.B. in Kombination mit dem Summiergetriebe 7, wie es Fig. 1 zeigt, und das durch ein Schaltgetriebe 22 gebildet sein kann.

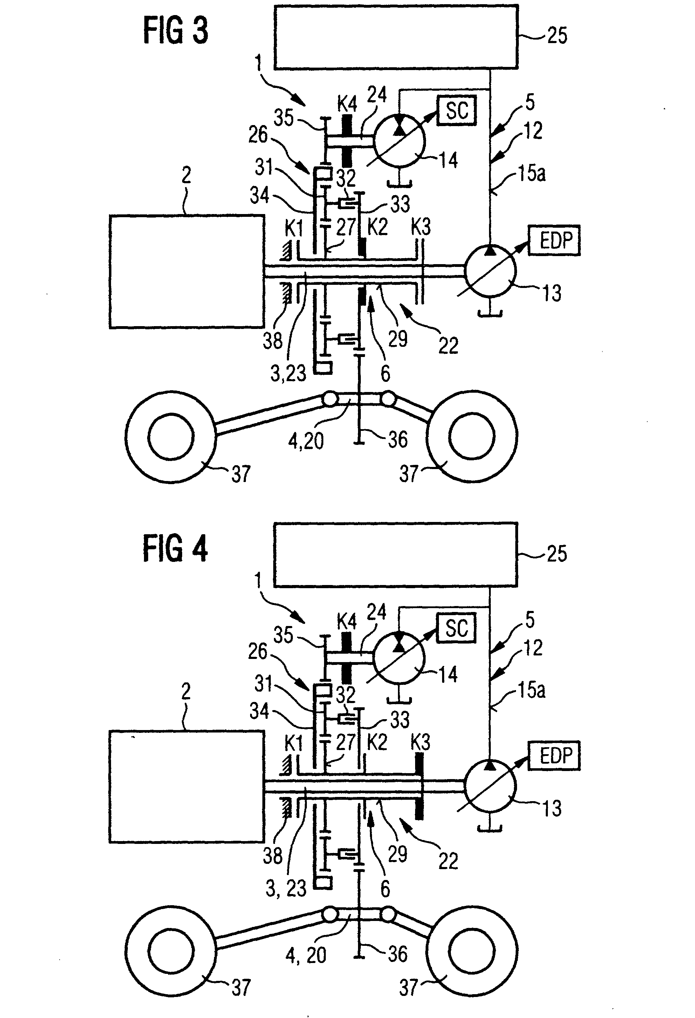

Fig. 2 bis 5 zeigen einen Fahrantrieb 1 in abgewandelter Ausgestaltung und in unterschiedlichen Schaltstellungen. Dieser Fahrantrieb 1 wird deshalb zunächst anhand der Fig. 2 beschrieben, und dann werden weitere unterschiedliche Schaltstellungen anhand der Fig. 3 bis 5 beschrieben. Bei diesem Ausführungsbeispiel, bei dem gleiche oder vergleichbare Teile mit gleichen Bezugszeichen versehen sind, ist ein Schaltgetriebe 22 mit mehreren Gängen, hier vier Gängen G, vorgesehen, das eine durch die Antriebswelle 3 gebildete oder damit verbundene erste Getriebewelle 23 und eine dazu parallel angeordnete zweite Getriebewelle 24 aufweist. Das Schaltgetriebe 22 ist zwischen der Antriebsmaschine 2, vorzugsweise ebenfalls ein Dieselmotor, und der Hydropumpe 13 des hydrostatischen Getriebes 12 angeordnet, wobei die Antriebswelle 3 bzw. erste Getriebewelle 23 mit ihrem einen Ende mit der Antriebsmaschine 2 und mit ihrem anderen Ende mit der Hydropumpe 13 verbunden ist. Der Hydromotor 14 ist mit dem einen Ende der zweiten Getriebewelle 24 verbunden. Der Hydropumpe 13 und/oder dem Hydromotor 14 ist vorzugsweise jeweils eine Verstellvorrichtung EDP bzw. SC zugeordnet, die z. B. in vorbeschriebener Weise ausgebildet und durch die nicht dargestellte gemeinsame Steuervorrichtung verstellbar sind. Das hydrostatische Getriebe 12 kann mit einem offenen Kreislauf ausgebildet sein. An der Druckleitung 15a kann ein weiterer Verbraucher 25 angeschlossen sein. Wenn eine verstellbare Hydropumpe 13 verwendet wird, kann die erste Kupplung 16 fortfallen, da die Ein- und Ausschaltung des hydrostatischen Getriebes 12 und somit auch des ersten Antriebsstranges 5 durch das Einstellen eines Durchsatzvolumens und das Rückstellen in die Nullstellung bewirkt werden kann.

Das Schaltgetriebe 22 weist ein Planeten- oder Umlaufgetriebe 26 mit einem Sonnenrad 27 auf, das auf der ersten Getriebewelle 23 frei drehbar gelagert ist, vorzugsweise in Form einer hülsenförmig verlängerten Radnabe 29. Das Sonnenrad 27 kämmt mit einem oder mehreren auf dem Umfang verteilt angeordneten Planetenrädern 31, die jeweils durch ein Drehlager 32 um ihre Mittelachsen frei drehbar an einem auf der Radnabe 29 frei drehbar gelagerten Umlaufträgerzahnrad 33 gelagert sind. Das oder die Planetenräder 31 kämmen mit einem Hohlrad 34, das ebenfalls koaxial zur ersten Getriebewelle 23 frei drehbar gelagert ist, z.B. auf der Radnabe 29. Das Hohlrad 34 kämmt außenseitig mit einem Zahnrad 35, das fest mit der zweiten Getriebewelle 24 verbunden ist. Das Umlaufträgerzahnrad 33 kämmt mit einem Abtriebszahnrad 36, das auf einer dritten, vorzugsweise parallelen Getriebewelle 20 sitzt, die die Abtriebswelle 4 bildet und mit den Rädern 37 des Fahrgestells eines Baufahrzeugs, z.B. eines Baggers, verbunden ist.

Das Schaltgetriebe 22 weist vier Kupplungen K1 bis K4 auf. Durch die erste Kupplung K1 läßt sich das Sonnenrad 27 oder die Radnabe 29 fixieren oder lösen, z.B. durch Kuppeln mit einem feststehenden Teil 38 des Fahrgestells oder Baufahrzeugs. Die zweite Kupplung K2 dient zum Verbinden und Lösen des ersten Umlaufträgerzahnrads 33 mit der Radnabe 29. Mit der dritten Kupplung K3 kann die erste Getriebewelle 23 bzw. die Hydropumpe 13 mit der Radnabe 29 verbunden oder davon gelöst werden. Die vierte Kupplung K4 dient zum Verbinden und Lösen des Zahnrads 35 mit dem Hydromotor 14 bzw. dessen Wellenzapfen oder der zweiten Getriebewelle 24.

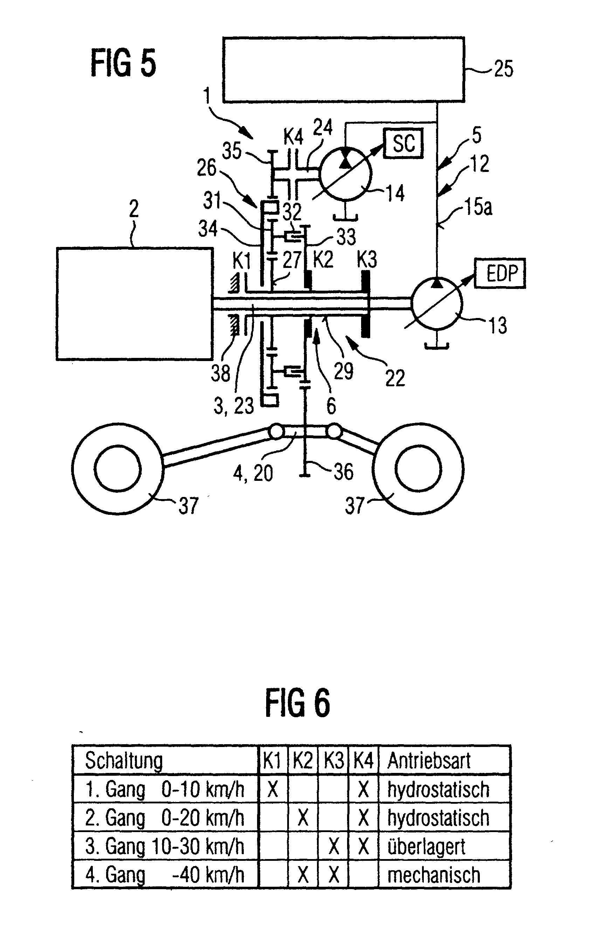

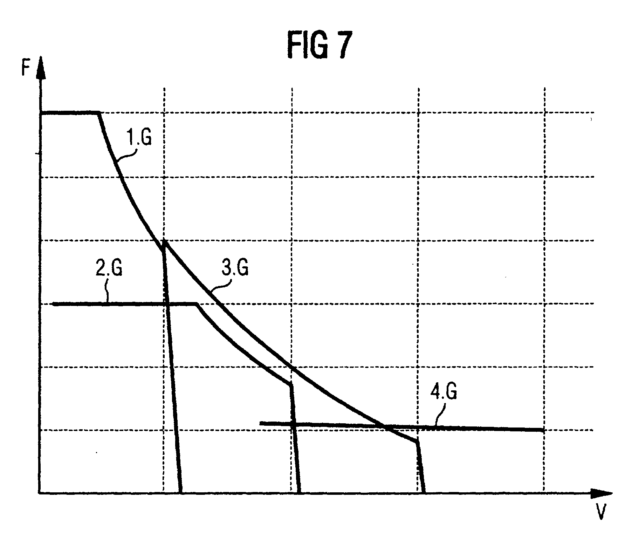

Aus den Figuren 6 und 7 lassen sich die vier Gänge 1.G bis 4.G übersichtlich entnehmen, wobei Fig. 7 die Bereiche der Gänge G unter Berücksichtigung des über der Geschwindigkeit V aufgetragenen Drehmoments F dargestellt sind.

Der erste Gang 1.G wird durch Einrückung der ersten und vierten Kupplung K1, K4 gemäß Fig. 2 geschaltet (eingerückte Kupplungen geschwärzt), wobei bei hydrostatischer Antriebsart die Antriebsverbindung über den ersten Antriebsstrang 5 mit dem hydrostatischen Getriebe 12 dem Zahnrad 35, dem Umlaufgetriebe 26, dem Umlaufträgerzahnrad 33 und dem Abtriebszahnrad 36 erfolgt. Beim vorliegenden Ausführungsbeispiel läßt sich hierbei eine Fahrgeschwindigkeit von 0 bis etwa 10 km/h erreichen.

Der zweite Gang 2.G (Fig. 3) wird durch Einrücken der zweiten und vierten Kupplung K2, K4 geschaltet, wobei bei hydrostatischer Antriebsart im Unterschied zum ersten Gang 1.G das Sonnenrad 27 und das Umlaufträgerzahnrad 33 mittels der Radnabe 29 durch die zweite Kupplung K2 fest miteinander verbunden werden, wodurch eine Fahrgeschwindigkeit von 0 bis etwa 20 km/h erreicht wird.

Der dritte Gang 3.G wird durch Einrücken der dritten und vierten Kupplung K3, K4 geschaltet (Fig. 4). Hierbei sind beide Antriebsstränge 5, 6 eingeschaltet, wodurch die Getriebewelle 23 mit der Radnabe 29 verbunden werden und sich eine überlagerte hydrostatisch-mechanische Antriebsart ergibt und eine Fahrgeschwindigkeit von etwa 10 bis etwa 30 km/h erreicht wird.

Der vierte Gang 4.G wird durch Einrücken der zweiten und dritten Kupplung K2, K3 geschaltet, wobei die Kraftübertragung nur über den zweiten Antriebsstrang 6 mit der Radnabe 29 und den Zahnrädern 33, 36 bei rein mechanischer Antriebsart und mit einer Fahrgeschwindigkeit von bis 40 km/h erfolgt. Dabei ist es vorteilhaft, die Hydropumpe 13 in ihre Nullstellung zu verstellen oder zu halten, damit das hydrostatische Getriebe 5 nicht leer mitzulaufen braucht.

## Patentansprüche

1. Hydrostatisch-mechanischer Fahrantrieb (1) mit einer Antriebswelle (3), einem hydrostatischen Getriebe (12) , einer Abtriebswelle (4), einem mit der Antriebswelle (3) verbindbaren ersten Antriebsstrang (5), in welchem das hydrostatische Getriebe (12) angeordnet ist, einem mit der Antriebswelle (3) verbindbaren zweiten Antriebsstrang (6) und einem Umlaufgetriebe (26), das die Antriebsstränge (5, 6) mit der Abtriebswelle (4) verbindet und das einen ersten, mit dem ersten Antriebsstrang (5) verbundenen Eingang (8), einen zweiten, mit dem zweiten Antriebsstrang (6) verbundenen zweiten Eingang (9) und einen mit der Abtriebswelle (4) verbundenen Ausgang (11) aufweist,
wobei der Fahrantrieb (1)
in einem ersten Schaltzustand, in welchem nur der erste Antriebsstrang (5) mit der Antriebswelle (3) verbunden ist, als hydrostatischer Antrieb arbeitet, in einem zweiten Schaltzustand, in welchem nur der zweite Antriebsstrang (6) mit der Antriebswelle (3) verbunden ist, als mechanischer Antrieb arbeitet und in einem dritten Schaltzustand, in welchem sowohl der erste Antriebsstrang (5) als auch der zweite Antriebsstrang (6) mit der Antriebswelle (3) verbunden sind, als überlagerter hydrostatisch-mechanischer Antrieb arbeitet,
**dadurch gekennzeichnet,**
**daß** eine erste ein- und ausrückbare Kupplung (K1) zwischen einem Sonnenrad (27) oder einer damit verbundenen Radnabe (29) des Umlaufgetriebes (26) und einem festen Teil (38) des Fahrantriebs (1) wirksam ist.

2. Hydrostatisch-mechanischer Fahrantrieb nach Anspruch 1,
**dadurch gekennzeichnet,**
**daß** das Umlauf getriebe (26) eine Eingangswelle (23), eine Ausgangswelle (20) und eine Getriebewelle (24) aufweist, die vorzugsweise parallel zueinander angeordnet sind, daß das hydrostatische Getriebe (12) die Eingangswelle (23) und die Getriebewelle (24) miteinander verbindet, und daß die Eingangswelle (23), die Ausgangswelle (20) und die Getriebewelle (24) durch Zahnradgetriebe miteinander verbunden sind.

3. Hydrostatisch-mechanischer Fahrantrieb nach Anspruch 2,
**dadurch gekennzeichnet,**
**daß** das Umlaufgetriebe (26) drehbar auf der Antriebswelle (3) gelagert ist und durch Zahnräder (35, 36) mit der Getriebewelle (24) und der Abtriebswelle (4) verbunden ist, wobei eine zweite ein- und ausrückbare Kupplung (K2) zwischen einem Umlaufträgerrad (33) des Umlaufgetriebes (26) und dem Sonnenrad (27) oder der Radnabe (29) wirksam ist, wobei eine dritte, ein- und ausrückbare Kupplung (K3) zwischen dem Sonnenrad (27) oder der Radnabe (29) und der Antriebswelle (3) wirksam ist und wobei eine vierte, einund ausrückbare Kupplung (K4) zwischen dem der Getriebewelle (24) zugeordneten Zahnrad (35) und der hydrostatischen Maschine (14) des hydrostatischen Getriebes (12) wirksam ist.

4. Hydrostatisch-mechanischer Fahrantrieb nach einem der Ansprüche 1 bis 3,
**dadurch gekennzeichnet,**
**daß** das Umlaufgetriebe (26) ein Planetengetriebe ist.

5. Hydrostatisch-mechanischer Fahrantrieb nach einem der Ansprüche 1 bis 4,
**dadurch gekennzeichnet,**
**daß** das hydrostatische Getriebe (12) zwei Axialkolbenmaschinen (13, 14) aufweist, von denen eine oder beide bezüglich ihres Durchsatzvolumens und vorzugsweise auch bezüglich ihrer Drehrichtung veränderlich sind.

6. Hydrostatisch-mechanischer Fahrantrieb nach einem der Ansprüche 1 bis 5,
**dadurch gekennzeichnet,**
**daß** die Abtriebsdrehzahl des ersten Antriebsstranges (5) kleiner ist als die Abtriebsdrehzahl des zweiten Antriebsstranges (6).

7. Hydrostatisch-mechanischer Fahrantrieb nach Ansprüche 3,
**dadurch gekennzeichnet,**
**daß** der Fahrantrieb (1) mehrere Gänge aufweist, vorzugsweise vier Gänge (1.G bis 4.G).

8. Hydrostatisch-mechanischer Fahrantrieb nach Anspruch 7,
**dadurch gekennzeichnet,**
**daß** die Gänge (G) durch das Ein- und Ausrücken der Kupplungen (K1 bis K4) ein- und ausschaltbar sind.

9. Hydrostatisch-mechanischer Fahrantrieb nach einem der vorherigen Ansprüche,
**dadurch gekennzeichnet,**
**daß** ein Dieselmotor als ein die Antriebswelle (3) antreibendes Antriebsaggregat vorgesehen ist.

## Claims

1. Hydrostatic-mechanical drive (1) having a drive shaft (3), a hydrostatic transmission (12), a driven shaft (4), a first drive train (5) which can be connected to the drive shaft (3) and in which the hydrostatic transmission (12) is arranged, a second drive train (6) which can be connected to the drive shaft (3), and an epicyclic gear system (26) which connects the drive trains (5, 6) to the driven shaft (4) and which has a first input (8) connected to the first drive train (5), a second input (9) connected to the second drive train (6), and an output (11) connected to the driven shaft (4),
the drive (1) operating
in a first engagement state, in which only the first drive train (5) is connected to the drive shaft (3), as a hydrostatic drive,
in a second engagement state, in which only the second drive train (6) is connected to the drive shaft (3), as a mechanical drive, and
in a third engagement state, in which both the first drive train (5) and the second drive train (6) are connected to the drive shaft (3), as a combined hydrostatic-mechanical drive,
**characterised**
**in that** a first engageable and disengageable clutch (K1) is active between a sun wheel (27), or a wheel hub (29), connected thereto, of the epicyclic gear system (26), and a fixed part (38) of the drive (1).

2. Hydrostatic-mechanical drive according to Claim 1, **characterised in that** the epicyclic gear system (26) has an input shaft (23), an output shaft (20) and a transmission shaft (24), which are preferably arranged parallel to one another, **in that** the hydrostatic transmission (12) connects the input shaft (23) and the transmission shaft (24) to each other, and **in that** the input shaft (23), the output shaft (20) and the transmission shaft (24) are connected to one another by toothed gearing.

3. Hydrostatic-mechanical drive according to Claim 2, **characterised in that** the epicyclic gear system (26) is rotatably mounted on the drive shaft (3) and is connected to the transmission shaft (24) and the driven shaft (4) by gearwheels (35, 36), a second engageable and disengageable clutch (K2) being active between an epicyclic carrier wheel (33) of the epicyclic gear system (26) and the sun wheel (27) or the wheel hub (29), a third engageable and disengageable clutch (K3) being active between the sun wheel (27) or the wheel hub (29) and the drive shaft (3), and a fourth engageable and disengageable clutch (K4) being active between the gearwheel (35) assigned to the transmission shaft (24) and the hydrostatic machine (14) of the hydrostatic transmission (12).

4. Hydrostatic-mechanical drive according to one of Claims 1 to 3, **characterised in that** the epicyclic gear system (26) is a planetary gear system.

5. Hydrostatic-mechanical drive according to one of Claims 1 to 4, **characterised in that** the hydrostatic transmission (12) has two axial piston machines (13, 14), one or both of which are variable with respect to their throughput volume and preferably also with respect to their direction of rotation.

6. Hydrostatic-mechanical drive according to one of Claims 1 to 5, **characterised in that** the output speed of the first drive train (5) is less than the output speed of the second drive train (6).

7. Hydrostatic-mechanical drive according to Claim 3, **characterised in that** the drive (1) has a plurality of gears, preferably four gears (1st G to 4th G).

8. Hydrostatic-mechanical drive according to Claim 7, **characterised in that** the gears (G) can be engaged and disengaged by the engagement and disengagement of the clutches (K1 to K4).

9. Hydrostatic-mechanical drive according to one of the preceding claims, **characterised in that** a diesel engine is provided as a prime mover which drives the drive shaft (3).

## Revendications

1. Transmission hydrostatique mécanique (1) comportant un arbre d'entraînement (3), un engrenage hydrostatique (12), un arbre de sortie (4), une première branche d'entraînement (5) dans laquelle est disposé l'engrenage hydrostatique (12), une deuxième branche d'entraînement (6) connectable à l'arbre d'entraînement (3), et un engrenage à satellites (26) qui' connecte les branches d'entraînement (5, 6) aux arbres de sortie (4) et qui présente une première entrée (8) connectée à la première branche d'entraînement (5), une deuxième entrée (9) connectée à la deuxième branche d'entraînement (6), et une sortie (11) connectée à l'arbre d'entraînement (4), tandis que la transmission (1)
fonctionne en transmission hydrostatique dans un premier état de couplage, dans lequel seule la première branche d'entraînement (5) est connectée à l'arbre d'entraînement (3), fonctionne en transmission mécanique dans un deuxième état de couplage, dans lequel seule la deuxième branche d'entraînement (6) est connectée à l'arbre d'entraînement (3), et fonctionne en transmission hydrostatique mécanique superposée dans un troisième état de couplage, dans lequel aussi bien la première branche d'entraînement (5) que la deuxième branche d'entraînement (6) sont connectées à l'arbre d'entraînement (3),
**caractérisée en ce que**
un premier dispositif d'accouplement (K1) est actif, embrayable et débrayable entre une roue solaire (27) ou un moyeu de roue (29) qui y est connecté et qui fait partie de l'engrenage à satellites (26), et une pièce fixe (38) de la transmission (1).

2. Transmission hydrostatique mécanique selon la revendication 1,
**caractérisée en ce que**
l'engrenage à satellites (26) présente un arbre d'entrée (23), un arbre de sortie (20) et un arbre d'entraînement (24) qui sont disposés de préférence parallèlement, et **en ce que** l'engrenage hydrostatique (12) connecte l'un à l'autre l'arbre d'entrée (23) et l'arbre d'entraînement (24), et **en ce que** l'arbre d'entrée (23), l'arbre de sortie (20) et l'arbre d'entraînement (24) sont connectés l'un à l'autre à l'aide de transmissions à engrenages.

3. Transmission hydrostatique mécanique (1) selon la revendication 2,
**caractérisée en ce que**
l'engrenage à satellites (26) est logé de façon pivotante sur l'arbre d'entraînement (3) et connecté à l'aide de roues dentées (35, 36) à l'arbre d'entraînement (24) et à l'arbre de sortie (4), tandis qu'un dispositif d'accouplement (K2) est actif, embrayable et débrayable entre un roue support de rotation (33) de l'engrenage à satellites (26) et de la roue solaire (27) ou du moyeu de roue (29), tandis troisième dispositif d'accouplement (K3) est actif, embrayable et débrayable entre la roue solaire (27) ou le moyeu de roue (29) et l'arbre d'entraînement (3), et tandis qu'un quatrième dispositif d'accouplement (K4) est actif, entre la roue-dentée (35) adjointe à l'arbre d'entraînement (24) et la machine hydrostatique (14) de l'engrenage hydrostatique (12).

4. Transmission hydrostatique mécanique selon l'une des revendications 1 à 3,
**caractérisée en ce que**,
l'engrenage à satellites (26) est un engrenage planétaire.

5. Transmission hydrostatique mécanique selon l'une des revendications 1 à 4,
**caractérisée en ce que**,
l'engrenage hydrostatique (12) présente deux moteurs à pistons axiaux (13, 14), dont l'un ou les deux sont transformables relativement à leur volume de débit et de préférence également relativement à leur direction de rotation.

6. Transmission hydrostatique mécanique selon l'une des revendications 1 à 5,
**caractérisée en ce que**,
la vitesse de sortie de la première branche d'entraînement (5) est plus petite que la vitesse de sortie de la deuxième branche d'entraînement (6).

7. Transmission hydrostatique mécanique selon la revendication 3,
**caractérisée en ce que**,
la transmission (1) présente plusieurs rapports, de préférence quatre rapports (1.G à 4.G).

8. Transmission hydrostatique mécanique selon la revendication 7,
**caractérisée en ce que**,
les rapports (G) peuvent être mis en circuit et hors circuit, grâce à l'embrayage et au débrayage des dispositifs d'accouplement K1 à K4.

9. Transmission hydrostatique mécanique selon l'une des revendications précédentes,
**caractérisée en ce que**,
un moteur diesel est prévu comme groupe motopropulseur qui actionne l'arbre d'entraînement (3).
